# EUROPEAN PATENT APPLICATION

(11) **EP 4 796 219 A2**
(43) Date of publication of application: **26.08.2026**
(21) Application number: 26159415.4
(22) Date of filing: 18.02.2026
(51) Int. Cl.: B01L 3/00

(54) **POSITIVE PRESSURE FILTRATION APPARATUS AND METHOD**

(30) Priority: 19.02.2025 US 202563760542 P; 04.02.2026 US 202619530058
(71) Applicant: Scientific Plastic Products, Inc., Oceanside, California 92054 (US)
(72) Inventor: Ellis, Samuel A., Oceanside, 92054 (US); Landaverde, Elio, Oceanside, 92054 (US); Caustill, Joseph S., Oceanside, 92054 (US); Hingorani, Kishan G., Oceanside, 92054 (US)
(74) Representative: CMS Cameron McKenna Nabarro Olswang LLP

(57) **Abstract**

The disclosed positive pressure filtration system for processing fluid samples comprises a plunger array comprising a plurality of plungers attached to a plunger holder plate. The system further includes an array of interconnected syringe type barrels aligned with the plungers and each barrel having at least one internal filter and/or pressure valve at an exit port. A rectangular well plate lid is also provided with a plurality of upwardly extending cylindrical retainers to receive the barrels and to engage the ports of the barrels to allow fluid to pass from the barrels into a well plate positioned below the lid. A force applied to the plunger holder plate causes the plungers to be slidably received in each of the barrels to create positive pressure in the barrel to force the samples through the filter and/or pressure valve and expelled through the barrel port and into a well plate.

## Description

### CROSS-REFERENCE TO RELATED APPLICATIONS

The present application claims the benefit of U.S. Provisional Application No. 63/760,542 filed February 19, 2025, the contents of which are expressly incorporated herein by reference.

### STATEMENT RE: FEDERALLY SPONSORED RESEARCH/DEVELOPMENT

### Not Applicable

### BACKGROUND

### 1. Technical Field

The present disclosure generally relates to fluid sample filtration, and more particularly, to a device for filtering a multitude of biological or chemical fluid samples simultaneously in a laboratory setting using positive pressure filtration.

### 2. Related Art

Utilizing pressure filtration for a variety of applications in sample preparation is well known in the art. Generally, there are two types of pressure filtration used: negative pressure filtration and positive pressure filtration. Negative pressure filtration, more commonly known as vacuum filtration, is accomplished by creating a vacuum on one side of a filter membrane, pulling the sample on the opposite side of the filter membrane through the membrane, filtering out materials such as large particles, impurities, and solids. Applications of vacuum filtration are widespread but have some known limitations. For example, common methods of vacuum filtration require a vacuum manifold system, which is a standalone device that may not be compatible with standard laboratory automation systems. This type of system can be expensive and large and may create a strain on laboratories that use them.

Additionally, when the application of well plates in vacuum filtration is taken into consideration, there are further limitations. These limitations can include drying of samples, uneven pressure distribution between wells, an upper limit for the sample size in each well, and an exclusion of viscous samples. When vacuum filtration is used for samples in a well plate, some wells may have solvents that flow through more quickly than others. This can cause the sorbents left on the filter membrane to dry more quickly than other wells, which may affect sample quality and recovery. When a vacuum manifold is used, the user can tell how much negative pressure is being applied in total but cannot tell how much negative pressure is being applied to each well individually and if the pressure applied is equal between wells. When the solvent is pulled through one of the wells, the vacuum applied to the other wells will change. Additionally, the vacuum manifold must apply enough negative pressure to effectively allow the solvent to flow through the filter, but not so much that the filtration is rendered ineffective. This creates an upper limit on how much sample may be filtered using this method and places a limitation on the viscosity of the sample. Due to these reasons, vacuum filtration may not be the correct choice for many samples, and positive pressure filtration may be elected to be used instead.

Positive pressure filtration is accomplished by creating positive pressure above a sample which pushes the sample to the opposite side of the filter membrane, filtering out materials such as large particles, impurities, and solids. Positive pressure can either be accomplished by using pressurized gas or mechanical plunging. Positive pressure filtration allows for evenly distributed pressure across all wells, eliminating the limitations related to uneven pressure distribution and sorbent drying. Additionally, positive pressure filtration allows for larger volume and more viscous samples to be processed. Though positive pressure filtration resolves some limitations related to vacuum filtration methods, there are still additional limitations relating to the positive pressure filtration devices on the market today.

Positive pressure manifolds, which utilize pressurized gas, are oftentimes relatively large, expensive, standalone devices, but allow for use with well plates so that more than one sample may be filtered at once. Inversely, syringe filters, which utilize mechanical plunging, are more space and cost-effective, but require manual plunging and only allow for filtration of one sample at a time. Additionally, the filter tips that are compatible with syringes often only have one thin filter and do not have media. The use of multiple thick filters and media in pressure filtration allows for a more through separation of components in a sample when compared to a thin filter alone.

Thus, there is a need in the art for a cost-effective device that allows for mechanical positive pressure filtration of multiple samples simultaneously, that may be used with media and one or more filters of varying thickness that may be operated manually or with an automation system.

### BRIEF SUMMARY

In accordance with an embodiment of the present disclosure described herein, there is provided a positive pressure filtration system wherein samples may be processed via positive pressure filtration. The positive pressure filtration system includes a plunger array, a barrel array, and a barrel retainer plate.

The plunger array includes a plurality of plungers and a plunger holder plate. Each plunger includes a member formed along a plunger axis, a first upper end, and a second lower end. The first upper end has a generally planar surface extending radially from the plunger axis and the second lower end has an engagement seal. The plunger holder plate includes opposed upper and lower faces, the lower face having a plurality of slotted openings adapted to slidably receive the generally planar surfaces of the plurality of plungers.

The barrel array includes a plurality of barrels and a barrel retainer plate and further includes one or more filters in each barrel that may be used in filtering of the sample. In another example of the device, a duck bill valve may be used in the processing and/or purification of a sample. It has been contemplated by this disclosure that each barrel may include both one or more filters and a duck bill valve. Each barrel includes a first top end, and a second bottom end formed along a barrel axis. The first top end includes a generally planar top face with a generally circular opening and a surface extending outwardly from the circular opening defining an upper rim. Further, each barrel includes a sidewall extending downwardly from the top surface forming a barrel tube and interior barrel cavity. The second bottom end includes a tip extending downwardly from the barrel tube defining a Luer connector and further defining a tip opening, the tip opening creating a passage in communication with the barrel cavity. The barrel cavity is configured to slidably receive a plunger of the plunger array in sealing engagement with the sidewall of the barrel cavity. The filter is configured to be disposed within a barrel cavity of the plurality of barrels and the duck bill valve is configured to be disposed within a tip passage of the plurality of barrels. The barrel retainer plate includes opposed upper and lower faces and a plurality of generally circular openings. The generally circular openings extend through the barrel retainer plate and are sized to receive the barrel tubes. The upper face includes groove depressions formed within the surface of the upper face adjacent the openings, the groove depressions being adapted to frictionally engage the upper rim of the barrels.

The barrel base includes a rectangular member configured to sizably fit over the top surface of a well plate, the rectangular member including a plurality of integrally formed cylindrical retainers. Each cylindrical retainer has upwardly extending sidewalls sized to receive a barrel tube of the barrel array. The rectangular member further includes a plurality of integrally formed Luer port receptacles sized to complementarily receive and retain a Luer connector of the plurality of barrels.

In accordance with an embodiment of the present disclosure, the components of positive pressure filtration system must be assembled and set up prior to operation. The barrel array is assembled by placing each barrel of the plurality of barrels, having either at least one filter or a duck bill valve disposed within, within an opening of the barrel retainer plate and frictionally engaging the upper rim of each barrel to the groove depressions of the barrel retainer. The plunger array is assembled by sliding the upper end of each plunger into a slotted opening of the plunger holder plate. The barrel array is then disposed within the barrel base, the Luer connector of each barrel being received by a corresponding Luer port and the barrel tube of each barrel being received by a corresponding cylindrical retainer. The rectangular member of the barrel base is then placed atop a well plate, the barrel array still being retained by the barrel base.

In use, a sample is put within the barrel cavity of each barrel, then each plunger of the plunger array is lowered into a corresponding barrel cavity. The engagement seals of each plunger engage the inner sidewalls of the corresponding barrel cavity, and the plunger array is pressed downwardly, creating positive pressure within each barrel cavity. The positive pressure within each barrel pushes the sample through the filters or duck bill valve. The sample then flows through each tip passage and out of the positive pressure filtration system into the well plate.

### BRIEF DESCRIPTION OF THE DRAWINGS

These and other features and advantages of the various embodiments disclosed herein will be better understood with respect to the following description and drawings, in which like numbers refer to like parts throughout, and in which:
FIG. 1 shows a top perspective view of the mechanical positive pressure filtration system, shown in extended positioning above a well plate;
FIG 2. shows a bottom perspective view of a partially assembled plunger array component of the positive pressure filtration system;
FIG. 3 shows a bottom perspective view of components of the plunger array, showing assembly of some of the components of the plunger array;
FIG. 4 shows a top perspective view of a partially assembled barrel array component of the positive pressure filtration system in extended positioning above the barrel base component of the positive pressure filtration system;
FIG. 5 shows a bottom perspective view of a partially assembled barrel array component of the positive pressure filtration system in extended positioning above the barrel base component of the positive pressure filtration system;
FIG. 6 shows a cut away view of a portion of the lower end of a barrel from the barrel array component, with internal components shown in broken lines;
FIG. 7 shows a perspective view of a duck bill valve;
FIG. 8 shows a side plan view of the mechanical positive pressure system in extended positioning above a well plate;
FIG. 9 shows a side plan view of the mechanical positive pressure system from side view 9-9 shown in Fig. 8 in extended positioning above a well plate;
FIG. 10 shows a cross sectional view of the mechanical positive pressure filtration system along line 10-10 shown in Fig. 9 in extended positioning above a well plate;
FIG. 11 shows a cross sectional view of the mechanical positive pressure filtration system of Fig. 10, in an engagement position where the plunger array is engaging the barrel array and the barrel base is placed on top of a well plate;
FIG. 12 shows the area of interest 12 shown in broken lines in FIG. 11, depicting the mechanical positive pressure filtration system;
FIG. 13 shows a perspective view of the mechanical positive pressure filtration system as it may be disposed within an automated mechanical pressure apparatus;
FIG. 14 shows an area of interest view of the mechanical positive pressure filtration system of Fig. 13 as it may be disposed within an automated mechanical pressure apparatus, showing a partial cross section of the barrel base and partial cut away of the barrel to view the barrel cavity; and
FIG. 15 shows the mechanical positive pressure filtration system as it may be disposed within an automated mechanical pressure apparatus when the automated pressure apparatus is in operation and the plunger array is engaged with the barrel array.

### DETAILED DESCRIPTION

The detailed description set forth below in connection with the appended drawings is intended as a description of certain embodiments of a system for positive pressure filtration of fluid samples and related method and is not intended to represent the only forms that may be developed or utilized, nor are the described methods the only methods that could be employed. The description sets forth the various structure and/or functions in connection with the illustrated embodiments, but it is to be understood, however, that the same or equivalent structure and/or functions may be accomplished by different embodiments that are also intended to be encompassed within the scope of the present disclosure. It is further understood that the use of relational terms such as first and second, and the like are used solely to distinguish one entity from another without necessarily requiring or implying any actual such relationship or order between such entities.

In some embodiments, the numbers expressing dimensions, quantities, quantiles of ingredients, properties of materials, and so forth, used to describe and claim certain embodiments of the disclosure are to be understood as being modified in some instances by the term "about." Accordingly, in some embodiments, the numerical parameters set forth in the written description and attached claims are approximations that can vary depending upon the desired properties sought to be obtained by a particular embodiment. In some embodiments, the numerical parameters should be construed in light of the number of reported significant digits and by applying ordinary rounding techniques. Notwithstanding that the numerical ranges and parameters setting forth the broad scope of some embodiments of the disclosure are approximations, the numerical values set forth in the specific examples are reported as precisely as practicable. The numerical values presented in some embodiments of the disclosure may contain certain errors necessarily resulting from the standard deviation found in their respective testing measurements.

As used in the description herein and throughout the claims that follow, the meaning of "a," "an," and "the" includes plural reference unless the context clearly dictates otherwise. Also, as used in the description herein, the meaning of "in" includes "in" and "on" unless the context clearly dictates otherwise.

As used herein, and unless the context dictates otherwise, the term "coupled to" is intended to include both direct coupling (in which two elements that are coupled to each other contact each other) and indirect coupling (in which at least one additional element is located between the two elements). Therefore, the terms "coupled to" and "coupled with" are used synonymously.

Unless the context dictates the contrary, all ranges set forth herein should be interpreted as being inclusive of their endpoints, and open-ended ranges should be interpreted to include commercially practical values. Similarly, all lists of values should be considered as inclusive of intermediate values unless the context indicates the contrary.

The recitation of ranges of values herein is merely intended to serve as a shorthand method of referring individually to each separate value falling within the range. Unless otherwise indicated herein, each individual value is incorporated into the specification as if it were individually recited herein. All methods described herein can be performed in any suitable order unless otherwise indicated herein or otherwise clearly contradicted by context. The use of any and all examples, or exemplary language (e.g. "such as") provided with respect to certain embodiments herein is intended merely to better illuminate the disclosure and does not pose a limitation on the scope of the claimed inventive subject matter. No language in the specification should be construed as indicating any non-claimed element essential to the practice of the inventive subject matter.

Groupings of alternative elements or embodiments of the inventive subject matter disclosed herein are not to be construed as limitations. Each group member can be referred to and claimed individually or in any combination with other members of the group or other elements found herein. One or more members of a group can be included in, or deleted from, a group for reasons of convenience and/or patentability. When any such inclusion or deletion occurs, the specification is herein deemed to contain the group as modified thus fulfilling the written description of all Markush groups used in the appended claims.

It should be apparent to those skilled in the art that many more modifications besides those already described are possible without departing from the inventive concepts herein. The inventive subject matter, therefore, is not to be restricted except in the scope of the appended claims. Moreover, in interpreting both the specification and the claims, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification claims refers to at least one of something selected from the group consisting of A, B, C .... and N, the text should be interpreted as requiring only one element from the group, not A plus N, or B plus N, etc.

The following discussion provides many example embodiments of the inventive subject matter. Although each embodiment represents a single combination of inventive elements, the inventive subject matter is considered to include all possible combinations of the disclosed elements. Thus if one embodiment comprises elements A, B, and C, and a second embodiment comprises elements B and D, then the inventive subject matter is also considered to include other remaining combinations of A, B, C, or D, even if not explicitly disclosed. Various objects, features, aspects and advantages of the inventive subject matter will become more apparent from the following detailed description of preferred embodiments, along with the accompanying drawing figures in which like numerals represent like components.

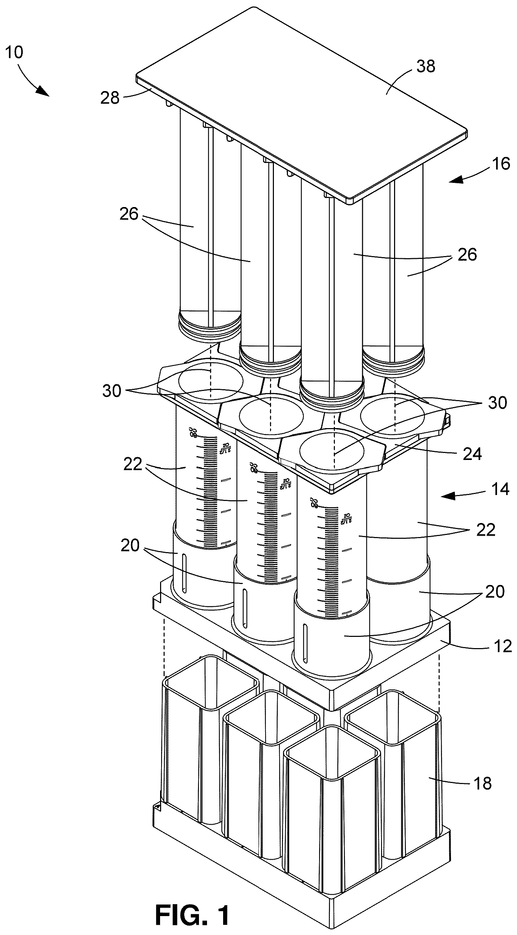

Referring now to the drawings, Figure 1 depicts a perspective view of the positive pressure filtration system 10. The general purpose of the positive pressure filtration system 10 is to process samples within a laboratory setting. In this disclosure, the term sample, samples, or other variations thereof generally refers to a chemical, biological, or ecological matter, consisting primarily of liquid. The term sample as used herein is purely exemplary and may represent (i.e., does not exclude) any of the various sample types, configurations, compositions, etc. that may be compatible with the disclosed positive pressure filtration system 10. In this disclosure, the term process, processing, or other variations thereof generally refers to the positive pressure filtration of a sample using the disclosed positive pressure filtration system 10 for the purpose of sample preparation. The sample preparation technique desired may include, but is not limited to: clarification, chromatography, extraction, purification, or any other sample preparation technique known in the art achieved through positive pressure filtration. Further, in this disclosure, the term process, processing, or other variations thereof refer solely to the sample preparation performed by the disclosed positive pressure filtration system 10, however the sample may or may not require a multitude of additional steps to be performed and/or repeated before or after the processing of the sample using the positive pressure filtration system 10 for the desired outcome. These additional steps may include any standard laboratory operation involved in the creation, manipulation, analysis, etc. of a chemical, biological, or ecological matter before the desired outcome is reached.

The positive pressure filtration system 10 shown in Figure 1 generally contains a barrel base 12, a barrel array 14, and a plunger array 16. The barrel base 12 is designed to sizably rest atop a well plate 18, acting as a well plate cover, and has a multitude of cylindrical retainers 20. The barrel array 14 has a multitude of barrels 22, the upper portion of the barrels 22 being designed to be releasably securable to the barrel retainer plate 24. The barrel array 14 may then be lowered into the barrel base 12, the lower portion of each barrel 20 being designed to rest within a corresponding cylindrical retainer 20. The plunger array 16 has a multitude of plungers 26, the upper portion of the plungers 26 being designed to be slotted into the plunger holder plate 28. The plunger array 16 may then be lowered into the barrel array 14, each plunger 26 having a corresponding barrel 22 to be disposed within. These interactions define a multitude of axes 30 running vertically through the positive pressure filtration system 10, the axes 30 corresponding to the center interaction point of each cylindrical retainer 20, corresponding barrel 22, and corresponding plunger 26. The current disclosure defines a positive pressure filtration system 10 having six interaction axes 30, but it has been contemplated that that positive pressure filtration system may be made with any number of interaction axes 30.

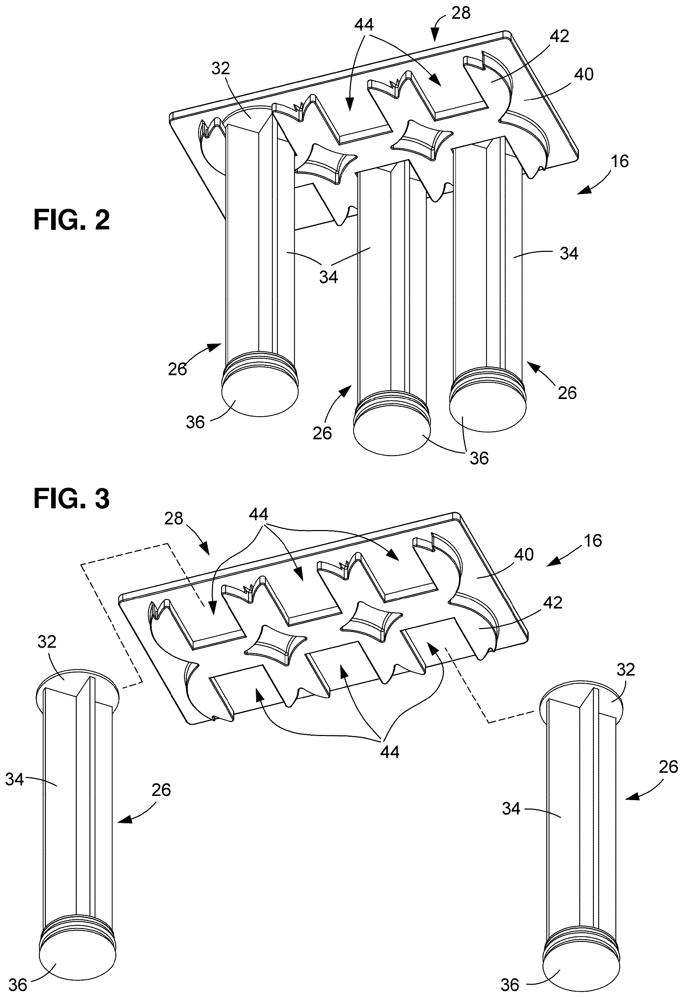

Turning now to Figures 2 and 3, a bottom perspective view of the plunger array 16 is shown in partial assembly to illustrate the component parts and assembly interaction of those parts. Each plunger 26 has a generally planar top surface 32, a member 34, and an engagement seal 36. The plunger holder plate 28 has an upper face 38 (shown in Figure 1) and opposed lower face 40, the lower face 40 having a protruding matrix 42 wherein multitude of slotted openings 44 are formed. The plungers 26 are attached to the plunger holder plate 28 by slotting the top surface 32 of the plunger 26 between the protruding matrix 42 and lower face 40, into the slotted openings 44. Figure 2 shows a multitude of plungers 26 slotted into the plunger holder plate 28 and Figure 3 shows how the plungers 26 are slotted into the plunger holder plate 28. The plunger holder plate 28 and plungers 26, when combined, form the plunger array 16. It has been contemplated by this disclosure that other methods known in the art for creating the plunger array 16 may be used, including but not limited to, press fitting the plungers 26 into the plunger holder plate 28, or integrally forming the plungers 26 to the plunger holder plate 28. The plunger holder plate 28 as well as the member 34 and top surface 32 of each plunger 26 may be made of any suitable rigid plastic material or other suitable rigid material. The engagement seal 36 of the plungers 26 may be made of an elastomeric material known in the art, including but not limited to, rubber, neoprene, silicone, flurosilicone, polyisoprene, or nitrile. Figure 2 shows a partial assembly of the plunger array 16 and although Figure 2 only shows three plungers 26 present in the plunger array 16, the fully assembled plunger array 16 includes all slotted openings 44 filled and the representation of Figure 2 is meant for illustrative purposes. Similarly, Figure 3 shows a partial assembly of the plunger array 16 and although Figure 3 only shows two plungers 26 being slotted into the plunger array 16, the fully assembled plunger array 16 includes all slotted openings 44 filled and this representation of Figure 3 is meant for illustrative purposes.

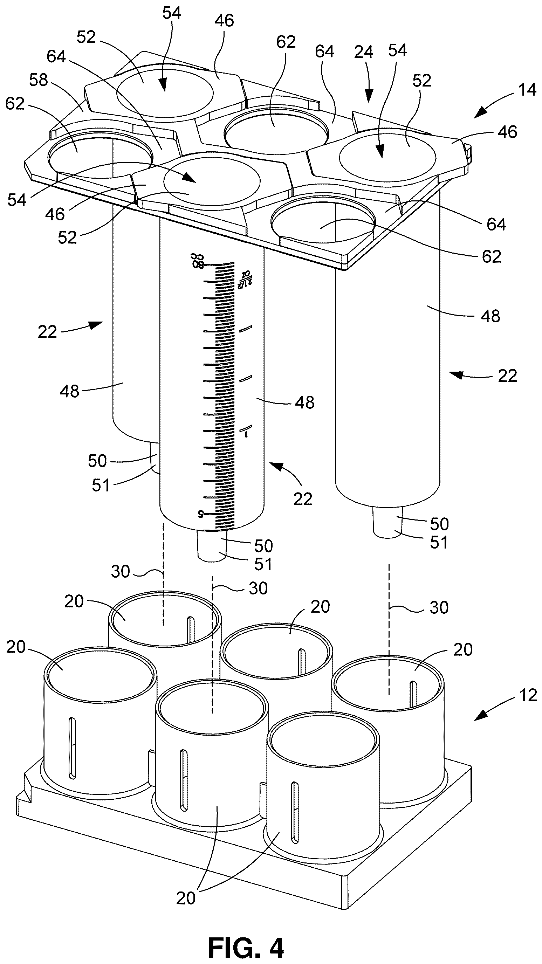

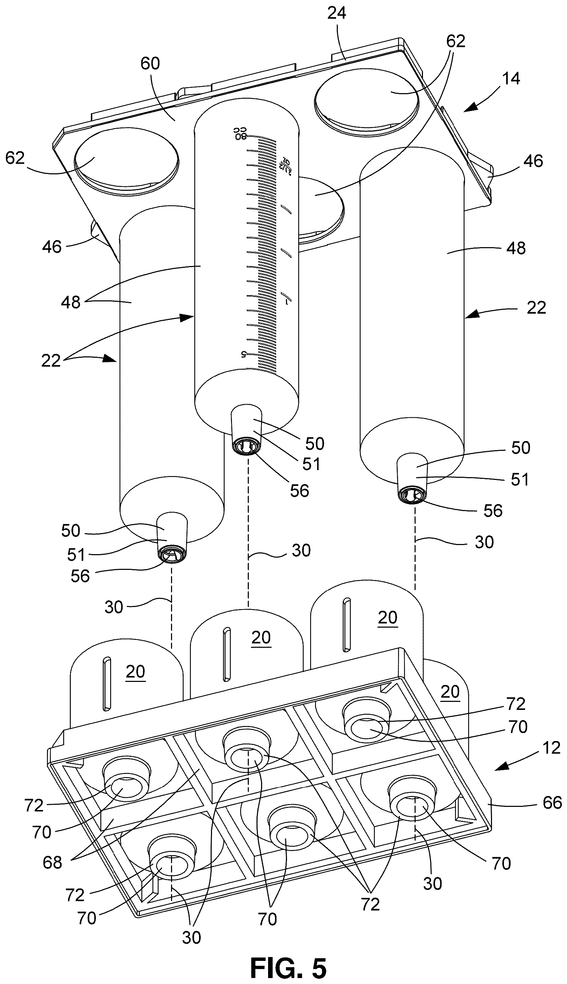

Referring now to Figure 4, a top perspective view of a partial assembly of the barrel array 14 in extended positioning above the barrel base 12 can be seen. Each barrel 22 has a top end with an upper rim 46 extending outwardly from the axis 30, a generally cylindrical barrel tube or barrel body 48, and a tip 50 with a Luer connector 51. The top end has an upper opening 52, allowing for fluid access into the barrel cavity 54, and a tip opening 56 (shown in Figure 5), allowing for fluid access out of the barrel cavity 54. The barrel retainer plate 24 has an upper face 58 and opposed lower face 60 (shown in Figure 5), and a multitude of holes 62 extending through the barrel retainer plate 24. The barrel retainer plate 24 additionally has a multitude of groove depressions 64 formed in the upper face 58 adjacent each hole 62. The barrels 22 are affixed to the barrel retainer plate 24 by sliding the barrel body 48 through the hole 62 and press fitting the upper rim 46 into the groove depression 64 of the upper face 58. The barrel retainer plate 24 and barrels 22, when combined, form the barrel array 14. It is contemplated by this disclosure that other methods known in the art for creating the barrel array 14 may be used, including but not limited to, thread fitting the barrels into the barrel retainer plate 24, or integrally forming the barrels 22 to the barrel retainer plate 24. The barrel retainer plate 24 may be made of any suitable rigid plastic material or other suitable rigid material and the barrels 22 may be made of a rigid, preferably chemically inert, plastic material or other suitable rigid material, including but not limited to: polypropylene, polyethylene, or polystyrene. Figure 4 shows a partial assembly of the barrel array and only shows three barrels 22 present in the barrel array 14, the fully assembled barrel array 14 will include all barrel retainer holes 62 filled and the representation of Figure 4 is meant for illustrative purposes to aid in the viewing of the component parts.

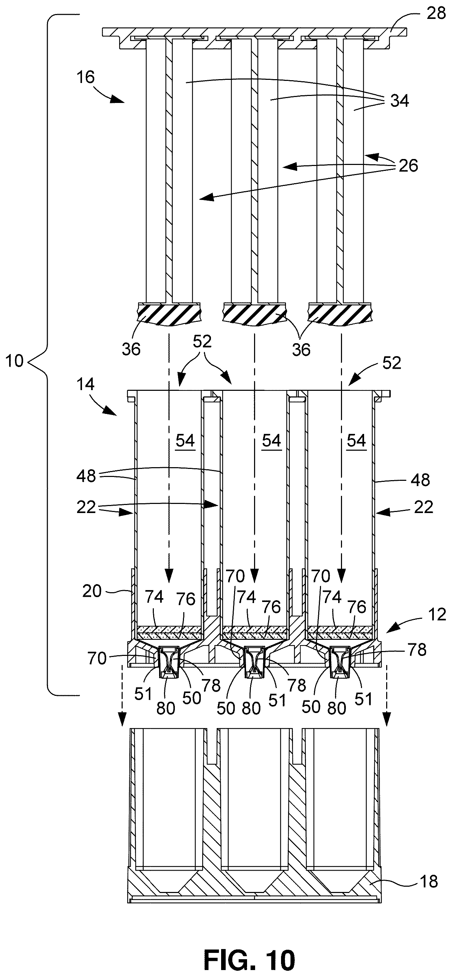

Turning now to Figure 5, a bottom perspective view of the barrel array 14 in extended positioning above the barrel base 12 can be seen. The barrel base 12 generally includes a rectangular member with a lip 66 and well dividers 68, a multitude of cylindrical retainers 20, and a corresponding multitude of Luer ports 70. The lip 66 extends from the perimeter of the rectangular member of the barrel base 12 and is designed to fit around the upper surface of a well plate 18 (shown in Figure 1) and the well dividers 68 extend downwardly from the rectangular member and are designed to fit between wells of a well plate 18 (shown in Figure 1). Both the lip 66 and well dividers 68 are designed to ensure proper placement of the barrel base 12 atop a well plate 18 (shown in Figure 1). When the barrel array 14 is lowered into the barrel base 12, the Luer connector 51 of each barrel 22 is engaged by the corresponding Luer port 70 in the barrel base 12, and the barrel body 48 of each barrel 22 is retained within the corresponding cylindrical retainer 20 of the barrel base 12. This mechanism can be further seen in Figures 10, 11, 12, and 14. The Luer port 70 has an opening 72 corresponding to the tip opening 56 to allow fluid to flow from the barrel cavity 54, through the tip 50, into a well of a well plate 18 (shown in Figure 1). The Luer connector 51 of the barrels 22 and Luer port 72 of the barrel base 12 demonstrate a releasably securable Luer slip or Luer tip type connection, but it is contemplated by this disclosure that any other Luer connection type known in the art, including but not limited to a Luer lock connection may be used. Additionally, it is contemplated by this disclosure that any non-Luer type releasably securable connection system known in the art may be used to connect the tip 50 of the barrels 22 to the barrel base 12 in lieu of the stated Luer slip connection. The barrel base 12 may be made of any suitable rigid plastic material or other suitable rigid material. Though Figure 5 shows a partial assembly of the barrel array 14 and only shows three barrels 22 present in the barrel array 14, the fully assembled barrel array 14 will include all cylindrical retainers 20 filled and this representation of Figure 5 is meant for illustrative purposes to aid in the viewing of the component parts.

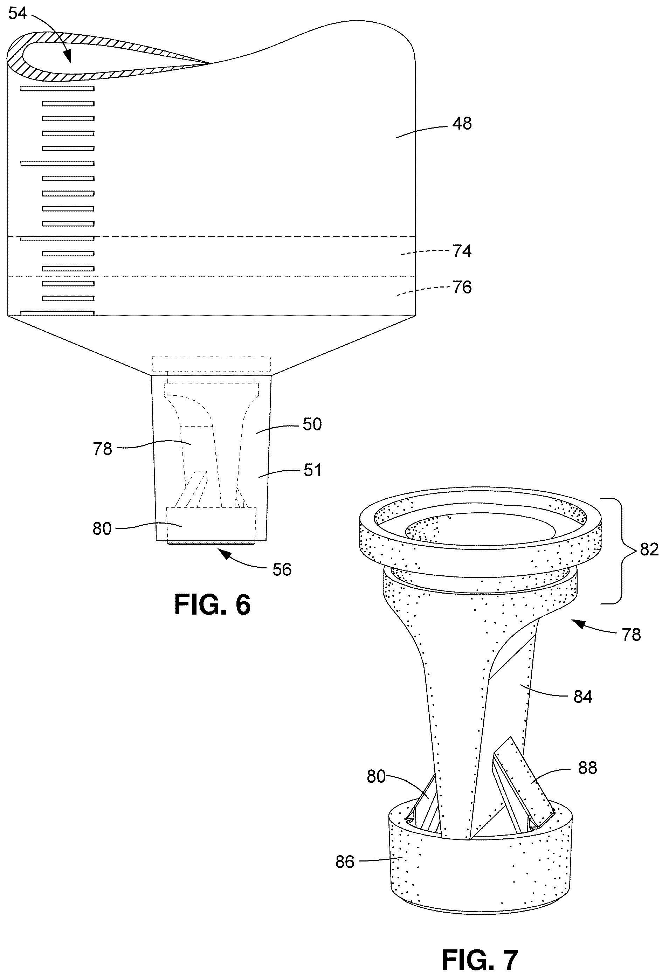

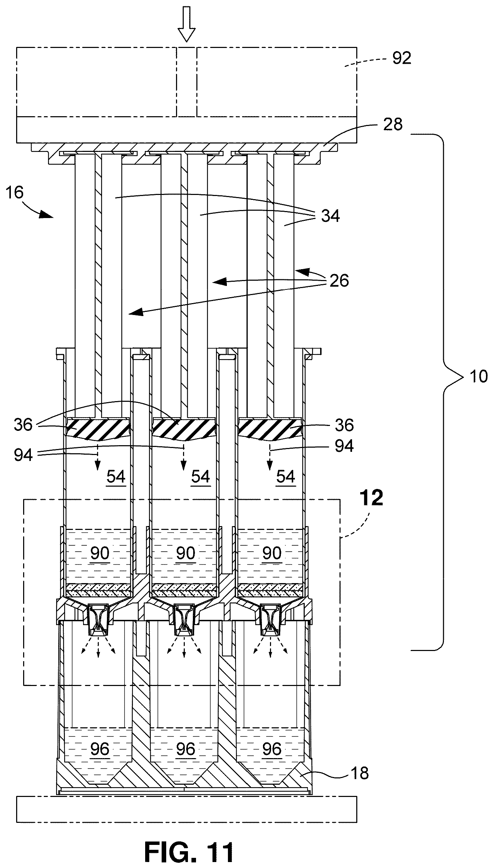

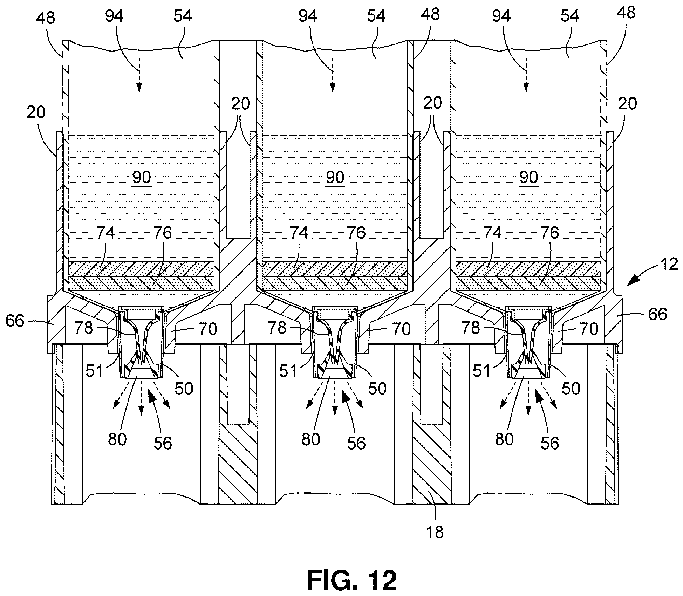

Figure 6 shows a magnified view of the lower portion of a barrel 22. More specifically, the lower portion of a barrel body 48 can be seen containing two internally positioned filters 74,76 (shown in broken lines) within the barrel cavity 54 and the tip 50 can be seen containing an internally positioned duck bill valve 78 (shown in broken lines) and an internally positioned duck bill valve limiter 80 (shown in broken lines). The filters 74,76 are sized to fit in sealed engagement within the barrel cavity 48 and filter out desired or undesired materials from a sample passed therethrough. The filters 74,76 are discussed in more detail in the discussions of Figures 11 and 12 below and are optional embodiments of the positive pressure filtration system 10. Figure 7 shows a perspective view of the duck bill valve 78 and duck bill valve limiter 80, used in the processing or purification of a sample, in more detail. The duck bill valve 78 generally consists of an upper sealing rim 82 and a narrow lower bill 84. The topmost portion of the sealing rim 82 is designed sit within the barrel cavity 54, just above the tip 50 and the lower portion of the sealing rim is designed to fit snugly within the uppermost portion of the tip 50 to seal off the tip 50 from the barrel cavity 54. The narrow bill 84 then extends downwardly, resting within the tip 50. The duck bill valve limiter 80 generally consists of an annular anchor 86 and inwardly extending arms 88. The annular anchor 86 fits snugly within the bottommost portion of the tip 50 and the inwardly extending arms 88 protrude inwardly toward the center of the annular anchor 86 and upwardly to rest on the exterior of the narrow bill 84 of the duck bill valve 78. The duck bill valve 78 limits the flow of liquid therethrough by requiring pressure to be applied within the barrel cavity 54 to allow liquid to pass through. Similarly, the duck bill valve limiter 80, when used with the duck bill valve 78, further limits the flow of liquid through the duck bill valve 78 by requiring additional pressure to be applied within the barrel cavity 54 to allow liquid to pass through. Additionally, the duck bill valve 78 and duck bill valve limiter 80 prevent the leaking of liquid from the tip opening 56, prevent any backsplash or backflow of liquid from reentering through the tip opening 56, and, especially when used without filters 74,76, act as a filtration mechanism by preventing especially large particles present in a sample from flowing through. The duck bill valve 78 and duck bill valve limiter 80 are made of an elastomeric material known in the art, including but not limited to, rubber, neoprene, silicone, flurosilicone, polyisoprene, or nitrile. Though the present disclosure shows and describes the use of a duck bill valve 78 and duck bill valve limiter 80, the positive pressure filtration system may be used with only the duck bill valve 78 or may be used without either the duck bill valve 78 or duck bill valve limiter 80 based upon the application of the positive pressure filtration system 10.

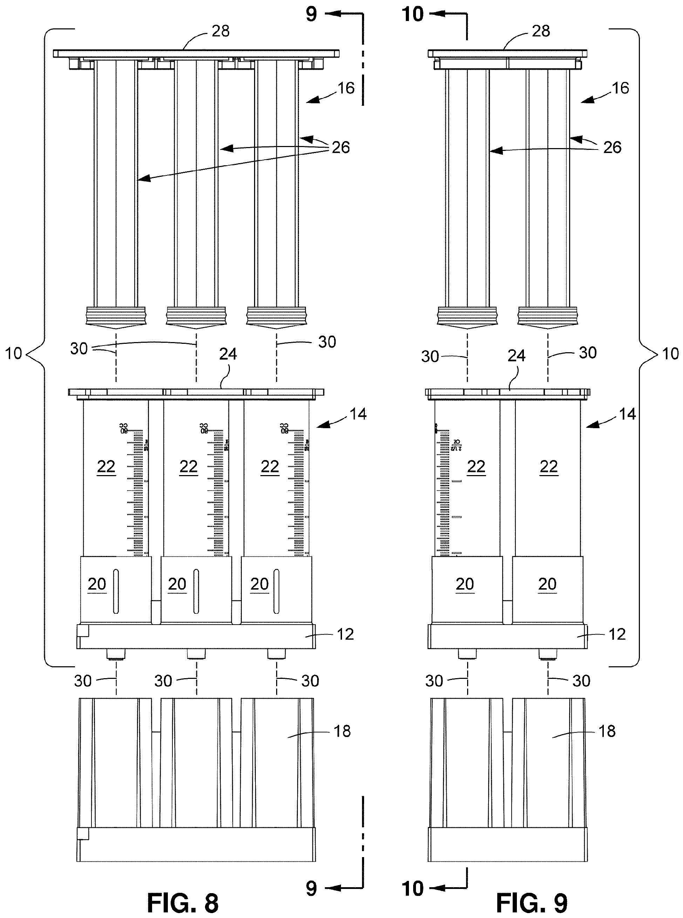

Looking now at Figures 8 and 9, a side view of the positive pressure filtration system 10 in extended positioning above a well plate 18 can be seen. Figure 8 shows a side plan view of the wider side of the positive pressure filtration system 10, wherein three interaction axes 30 can be seen and Figure 9 shows a side plan view of the narrower side of the positive pressure filtration system 10 from side view 9-9 shown in Figure 8, wherein two interaction axes 30 can be seen. Figures 8 and 9 show a two by three configuration, meaning that six interaction axes 30 are present in total. As discussed above, even though the present embodiment of the positive pressure filtration system 10 has six interaction axes, any number of interaction axes 30 and corresponding plungers 26, barrels 22, and cylindrical retainers 20 may be used. In use, the barrel base 12, containing the barrel array 14, will be lowered to rest atop a well plate 18 and the plunger array 16 will be lowered so that each plunger 26 enters the corresponding barrel 22 of the barrel array 14. The use and application of the positive pressure filtration system 10 will be discussed in more detail in the discussions of Figures 11 and 12 below.

Figure 10 shows a cross section of the positive pressure filtration device 10 in extended positioning above a well plate 18 along line 10-10 shown in Figure 9. Figure 10 shows, in further detail, how the barrel array 14 fits into and engages the barrel base 12. Each barrel 22 of the barrel array 14 is lowered into the corresponding cylindrical retainer 20 of the barrel base 12. The Luer connector 51 of each barrel 22 engages the corresponding Luer port 70 and the barrel body 48 rests within the corresponding cylindrical retainer 20. In the present embodiment, the lower portion of the tip 50 of each barrel 22 extends through the Luer port 70 and past the Luer port opening 72 of the barrel base 12, protruding lower into a well plate 18 than the lowest point of the barrel base 12. Depending upon which Luer or non-Luer connection type is used, the tip 50 may or may not protrude past the Luer port opening 72 of the barrel base 12. Further, Figure 10 shows how the filters 74,76, duck bill valve 78, and duck bill valve limiter 80 may be disposed within the barrel cavity 54 of each barrel 22, if each are elected to be used. When the positive pressure filtration system 10 is ready to be used, the secured barrel base 12 and barrel array 14 are placed atop a well plate 18. The plunger array 16 is then lowered into the barrel array 14, each plunger 26 being disposed within each corresponding barrel 22 with the engagement seal 36 of each plunger 26 engaging the inner sidewalls of the barrel cavity 54 of the corresponding barrel 22.

Turning now to Figures 11 and 12, Figure 11 shows a cross section of the positive pressure filtration system 10 in use and Figure 12 shows an area of interest enlarged, showing the positive pressure filtration system 10 within area 12 shown in Figure 11. Figure 12 shows the previously presented filters 74,76 in further detail, henceforth referred to independently as the upper filter 74 and the lower filter 76. The filters 74,76 are sized to fit in sealing engagement within and engage the inner sidewalls of the lower portion of the barrel cavity 54 of each barrel 22. The filters 74,76 may be made of any material or blend of materials known in the art to create a filter including but not limited to: polypropylene, polyethylene, polyvinylidene (PVDF), or polytetrafluoroethylene (PTFE). The upper filter 74 and lower filter 76 may be made of the same material or materials or may be made of a different material or materials. Additionally, the filters 74,76 may be any thickness and the upper filter 74 and lower filter 76 may be the same thickness or may have different thicknesses. It is additionally contemplated by this disclosure that media or slurry (not shown) may be added between the lower filter 76 and upper filter 74. The media or slurry may be any material or combination of materials known in the art including but not limited to: aluminum oxide, resin, sulfate, and/or cellulose. Alternatively, the positive pressure filtration system 10 may be used with no filters or any number of filters. Due to the wide range of applications for the positive pressure filtration system 10, the specifics of the filtration apparatuses (the filters 74,76, the media or slurry (not shown), duck bill valve 78, and duck bill valve limiter 80) may be customized to suit the specific needs of each application.

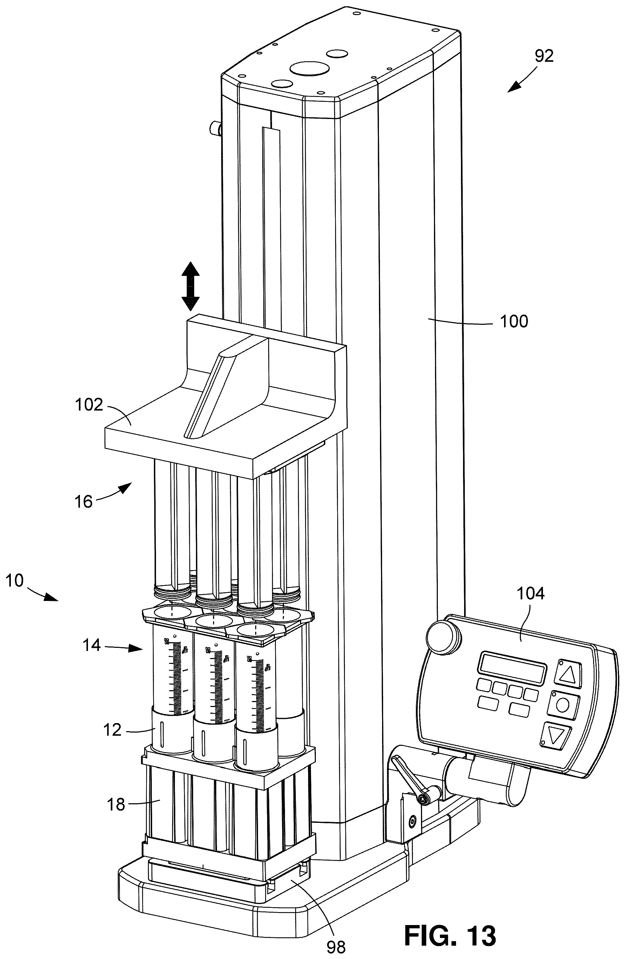

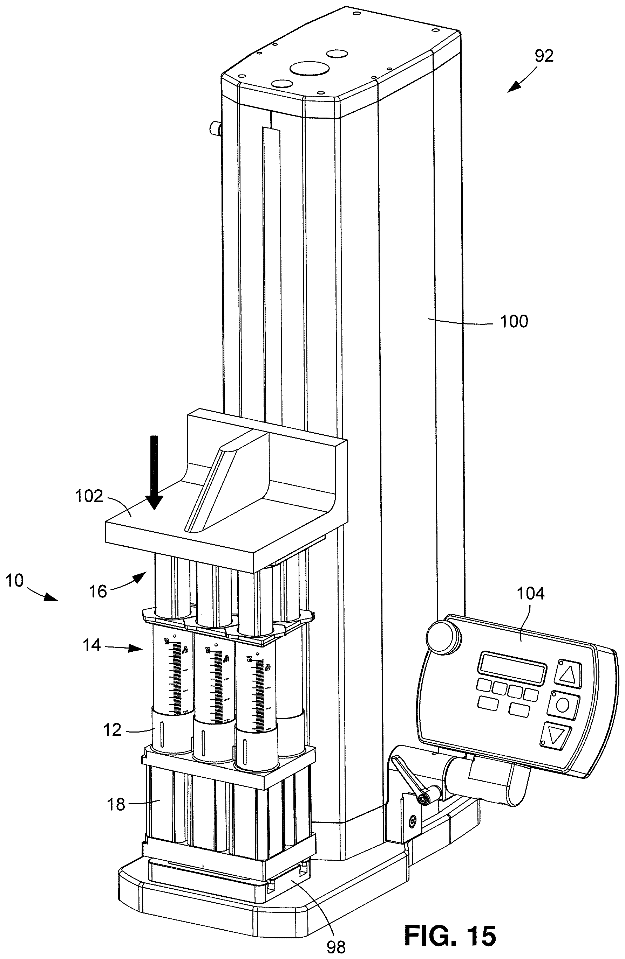

The positive pressure filtration apparatus 10 will now be described in use, which can be best seen in Figures 11 and 12. In use, the secured barrel base 12 and barrel array 14 are placed atop a well plate 18 and a desired crude sample 90 is placed within the barrel cavity 54 of each barrel 22 through the upper opening 52. In the present disclosure, a crude sample 90 is considered to be any sample that will be processed using the disclosed positive pressure filtration system 10. Additionally, the term "crude sample" 90 does not mean or imply that the sample is wholly unprocessed or unaltered. Any number of steps, processes, tests, experimentations, preparations, etc. may be performed, and the sample will still be considered "crude" for the purposes of this disclosure if it will be processed using the disclosed positive pressure filtration system 10. The plunger array 16 is then pressed into the barrel array 14 with downward pressure being applied to the upper face 38 of the plunger holder plate 28 by a system applying downward mechanical pressure. The system applying downward mechanical pressure, when referring to the embodiment shown in the drawings, is a standalone automated mechanical pressure device 92, which can be seen best in Figures 13 and 15 and will be discussed further in the discussion of said Figures. Similarly, the discussion of various systems for applying downward mechanical pressure will be discussed below in reference to Figures 13 and 15. Each plunger 26, having active downward pressure applied, is disposed within each corresponding barrel 22; the engagement seal 36 of each plunger 26 engaging the inner sidewalls of the barrel cavity 54 of the corresponding barrel 22. The engagement seal 36, once disposed within the corresponding barrel cavity 54, seals off the barrel cavity 54 and crude sample 90 contained within from any ambient gas surrounding the positive pressure filtration system 10 and compresses the gas contained within the barrel cavity 54, creating downward positive pressure 94. The force of the positive pressure 94 then pushes the crude sample 90 through the filtration apparatus or apparatuses, removing any desired or undesired matter as the sample passes through. In the embodiment shown in Figure 11, the positive pressure 94 pushes the crude sample 90 through the upper filter 74 and lower filter 76, then is pushed through the duck bill valve 78 located within the tip 50, flowing out of the narrow bill 84 and out of the barrel 22 through the tip opening 56, into a well of a well plate 18. The filtered sample now within a well of a well plate 18 is now considered a processed sample 96. Once all of the crude sample 90 is gone, leaving only the processed sample 96, the positive pressure filtration is complete.

Referring now to Figures 13 and 15, the positive pressure filtration system 10 can be seen as it would be disposed within a standalone automated mechanical pressure device 92. Though the specific system for applying mechanical pressure to the positive pressure filtration system 10 shown in Figures 13 and 15 is a standalone and automated device, it is contemplated by this disclosure that any other known systems of applying mechanical pressure may be used, including but not limited to: a hand or hands applying manual mechanical pressure, a manual mechanical pressure device, a standalone automated mechanical pressure device, or an automated mechanical pressure device which is a part of a larger automated system. As such, the standalone automated mechanical pressure device 92 as shown in Figure 13 will be discussed generally below, as the specifics of the system applying mechanical pressure does not alter the function of the disclosed positive pressure filtration system 10.

The standalone automated mechanical pressure device 92 shown in Figures 13 and 15 generally has a well plate base 98, a vertical support column 100, a pressure arm 102, and a control interface 104. The well plate base 98, located on a base platform of the standalone automated mechanical pressure device 92, retains the base of a well plate 18 so that it and the combined barrel base 12 and barrel array 14 disposed upon the well plate 18 may remain stationary while said device 92 is in use. The vertical column 100 extends upwardly from said base platform and contains the interworking mechanics (not shown) of the standalone automated mechanical pressure device 92. The pressure arm 102 extends outwardly from the vertical column 100 to be in vertical alignment with the well plate base 98 and retains the plunger holder plate 28 of the plunger array 16. The pressure arm 102 extends from a vertical track on the column 100 and said interworking mechanics within the column 100 move the pressure arm vertically along the track. The downward movement of the pressure arm 102 along the track causes each plunger 26 of the plunger array 16 to enter the corresponding barrel 22 of the barrel array 14, starting the positive pressure filtration process. Additionally, a control interface 104 extends outwardly from the column 100, allowing the user to manually control the movement of the pressure arm 102. Figure 13 shows the positive pressure filtration system 10 disposed within the standalone automated mechanical pressure device 92, with the pressure arm 102 raised and while the device 92 is stationary. Figure 15 then shows the positive pressure filtration system 10 disposed within the standalone automated mechanical pressure device 92, with the pressure arm 102 lowered and while the device 92 is in use.

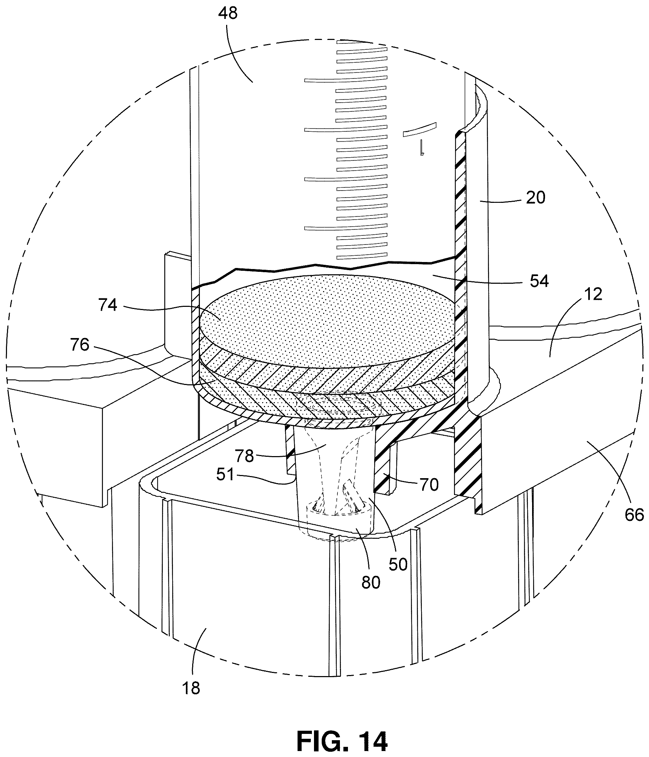

Lastly, Figure 14 shows an enlarged perspective view of the positive pressure filtration system 10 as it is disposed upon a well plate 18, more specifically showing the lower barrel body 48 and tip 50 of a single barrel 22 as it rests within the barrel base 12. A partial cross section of the barrel base 12, more specifically a cross section of cylindrical retainer 20 and corresponding Luer port 70 is shown, revealing a partial cut away of the barrel body 48 to show the barrel cavity 54. The cut away reveals the filters 74,76 disposed within the barrel cavity 54, the duck bill valve 78 and duck bill valve retainer 80 can be seen in phantom within the tip 50. Figure 14 further illustrates the interaction between the barrels 22 and barrel base 12 as discussed above. Namely, the securable connection between the Luer connector 51 and Luer port 70 and the interaction of the barrel body 48 resting within the corresponding cylindrical retainer 20. Additionally, Figure 14 further illustrates the placement of the filters 74,76, duck bill valve 78, and duck bill valve limiter 80 within the barrels 22 as discussed above. Namely, the placement of the upper filter 74 and lower filter 76 within the lower portion of the barrel cavity 54 and the placement of the duck bill valve 78 and duck bill valve limiter 80 within the tip.

The above description is given by way of example, and not limitation. Given the above disclosure, one skilled in the art could devise variations that are within the scope and spirit of the invention disclosed herein, including various ways of constructing and using the positive pressure filtration system 10. Further, the various features of the embodiments disclosed herein can be used alone, or in varying combinations with each other and are not intended to be limited to the specific combination described herein. Thus, the scope of the claims is not to be limited by the illustrated embodiments.

## Claims

1. A positive pressure filtration system comprising:
at least one plunger comprising a member having a proximal end and a distal end having an engagement seal;
at least one barrel comprising an elongate body having a proximal end with an opening and a distal end with an opening, defining an interior barrel cavity within the elongate body therebetween, the barrel cavity being configured to slidably receive the engagement seal of the at least one plunger in sealing engagement with the elongate body;
at least one filter configured to be disposed within a barrel cavity and engage the elongate body of the at least one barrel; and
a barrel base comprising a rectangular member having a proximal face and an opposed distal face, the distal face being configured to sizably fit and at least partially cover at least one well of a well plate, the rectangular member having at least one integrally formed barrel retainer, the at least one barrel retainer having sidewalls extending upwardly from the proximal face and being configured to retain at least a portion of the at least one barrel, such that the distal end opening of the at least one barrel is in fluid communication with a well of the underlying well plate.

2. The positive pressure filtration system of claim 1, wherein the quantity of barrels of the at least one barrel is equal to the quantity of barrel retainers of the at least one barrel retainer; and
wherein the quantity of barrels of the at least one barrel is equal to the quantity of plungers of the at least one plunger.

3. The positive pressure filtration system of claim 1, further comprising a plunger holder plate comprising opposed proximal and distal faces, the distal face having at least one slotted opening adapted to slidably receive the proximal end of the at least one plunger.

4. The positive pressure filtration system of claim 1, further comprising a barrel retainer plate comprising opposed proximal and distal faces and at least one opening extending through the barrel retainer plate sized to receive the at least one barrel, optionally wherein the barrel retainer plate further comprises at least one groove depression formed within the upper face of the barrel retainer plate adjacent the at least one opening, adapted to frictionally engage the proximal end of the at least one barrel.

5. The positive pressure filtration system of claim 1, wherein the distal end of the at least one barrel is tapered, defining a tip having a Luer connector.

6. The positive pressure filtration system of claim 6, wherein the at least one barrel retainer of the barrel base further comprises integrally formed Luer port receptacles sized to complementarily receive and retain the Luer connector of the at least one barrel.

7. The positive pressure filtration system of claim 6, further comprising a duckbill valve and a duckbill valve limiter disposed within the tip of the at least one barrel.

8. The positive pressure filtration system of claim 1, further comprising media disposed within the interior barrel cavity of the at least one barrel.

9. The positive pressure filtration system of claim 1, wherein the barrel base further has a lip extending downwardly from a perimeter of the rectangular member, the lip being configured to sizably fit the underlying well plate.

10. The positive pressure filtration system of claim 1, wherein distal face the barrel base further comprises downwardly protruding well dividers configured to sizably fit a well of the underlying well plate.

11. The positive pressure filtration system of claim 1, wherein the material of the at least one filter is selected from one or more of the group consisting of: polypropylene, polyethylene, polyvinylidene, or polytetrafluoroethylene.

12. A method of forming positive pressure filtration system, the method comprising:
forming a plunger array, the plunger array comprising:
at least one plunger comprising a member formed along a plunger axis having a proximal end and an opposed distal end, the proximal end having a generally planar surface extending radially from the plunger axis and the distal end having an engagement seal; and
a plunger holder plate comprising proximal upper and distal faces, the distal face having at least one slotted opening adapted to slidably receive the generally planar surface of the at least one plunger;
wherein the at least one plunger is slotted within the at least one slotted opening of the plunger holder plate to form the plunger array;
forming a barrel array, the barrel array comprising;
at least one barrel each barrel comprising a proximal end and a distal end and formed along a barrel axis, the proximal end comprising an opening and a surface extending outwardly from the opening defining a rim, each barrel further comprising a sidewall extending downwardly from the opening forming an interior barrel cavity, the distal end being tapered and comprising a tip extending downwardly from the barrel tube, defining a Luer connector and further defining a tip opening in fluid communication with the barrel cavity, wherein the barrel cavity is configured to slidably receive a plunger of the plunger array in sealing engagement with the sidewall of the barrel cavity;
a duck bill valve configured to be disposed within a tip passage of the at least one barrel; and
a barrel retainer plate comprising opposed proximal and distal faces and at least one generally circular opening extending through the barrel retainer plate, sized to receive the at least one barrel, the barrel retainer plate further comprising groove depressions formed within the proximal face of the barrel retainer plate adjacent the at least one opening, adapted to fictionally engage the rim of the at least one barrel;
wherein the at least one duck bill valve is disposed within the tip passage of the at least one barrel and wherein the rim of at least one barrel frictionally engages the groove depressions of the at least one opening to form the barrel array;
forming a barrel base comprising a rectangular member configured to sizably fit and at least partially cover at least one well of a well plate, the rectangular member having at least one integrally formed cylindrical retainer comprising upwardly extending sidewalls sized to receive at least one barrel of the barrel array, the at least one cylindrical retainer further comprising an integrally formed Luer port receptacle sized to complimentarily receive and retain a Luer connector of the plurality of barrels;
engaging the barrel array and the barrel base by placing the at least one barrel of the barrel array within the at least one cylindrical retainer of the barrel base;
depositing a sample within the interior barrel cavity of the at least one barrel; and
engaging the plunger array and the barrel array by disposing the engagement seal of the at least one plunger within the barrel cavity of the at least one barrel, such that the plunger axis is in line with the barrel axis, and exerting downward pressure upon the plunger holder plate.

13. The method of claim 13, further comprising the step of forming a duck bill valve limiter disposed within the tip passage of the at least one barrel around the duck bill valve.

14. The method of claim 13, further comprising: (a) the step of forming at least one filter disposed within the barrel cavity of the at least one barrel or (b) the step of forming a slurry disposed within the barrel cavity of the at least one barrel.

15. The method of claim 13, wherein the exertion of downward pressure upon the plunger holder plate is achieved via: (a) a human hand, (b) a standalone automated pressure device, (c) a manual mechanical pressure device or (d) an automated mechanical pressure device being part of a larger automated system.
